# EUROPÄISCHE PATENTSCHRIFT

(11) **EP 0 706 432 B1**
(45) Veröffentlichungstag und Bekanntmachung des Hinweises auf die Patenterteilung: **28.01.1998**
(21) Anmeldenummer: 94915033.8
(22) Anmeldetag: 10.05.1994
(51) Int. Cl.: B23B 27/14

(54) **SCHNEIDEINSATZ**
CUTTING INSERT
PLAQUETTE DE COUPE

(30) Priorität: 28.06.1993 DE 4321426
(43) Veröffentlichungstag der Anmeldung: 17.04.1996
(73) Patentinhaber: Widia GmbH, 45145 Essen (DE)
(72) Erfinder: AGUSTIN PAYA, José, D-45479 Mülheim (DE)
(74) Vertreter: Vomberg, Friedhelm, Dipl.-Phys.
(86) Internationale Anmeldenummer: DE9400560
(87) Internationale Veröffentlichungsnummer: WO9500271

(56) Entgegenhaltungen:
- EP-A- 0 208 668
- WO-A-93/11898
- US-A- 4 159 884

## Beschreibung

Die Erfindung betrifft einen Schneideinsatz für die spanende Bearbeitung, insbesondere zum Fräsen, Drehen oder Stechen, mit mindestens einer Schneidkante und mindestens einer sich hieran anschließenden Fase, in die im Abstand von der Schneidkante nebeneinanderliegende Einsenkungen oder Aussparungen hineinragen und diese abschnittsweise verjüngen.

Solche Schneideinsätze sind beispielsweise aus der EP 0 208 668 B1 bekannt, wobei sich an die Schneidkante eine Fase unter einem 0°-Fasenwinkel oder einem negativen Fasenwinkel anschließt, in den eine Anzahl von Einsenkungen oder Aussparungen hineinragen, die voneinander entlang der Schneidkante getrennt und im Abstand zur Schneidkante angeordnet sind. Die Einsenkungen oder Aussparungen ragen zudem in die sich an die Fase zur Schneideinsatzmitte hin anschließende gekrümmte Spanfläche hinein.

Einen entsprechenden Schneideinsatz zeigt auch die US-A-5 180 258, bei dem sich an eine positive Fase eine abfallende Flanke zur Schneideinsatzspanflächenmitte hin anschließt. Diese Flanke besitzt Einschnitte mit trapezförmigem Querschnitt, die bis auf den abgesenkten mittleren Spanflächengrund hinabreichen.

Aus der EP 0 360 774 A2 ist ein polygonaler Schneideinsatz bekannt, der auf seiner Spanfläche eine Vielzahl von Rippen aufweisen soll, deren Abstand zueinander in einer Richtung zur Schneidkantenmitte hin abnimmt. Zwischen den Rippen liegen jeweils muldenförmige Ausnehmungen, deren tiefste Absenkung unterhalb der Schneidkantenebene liegen soll. Diese Ausnehmungen erstrecken sich in einem Teilbereich in eine sich an die Schneidkante anschließende negative Fase. Mit diesem Werkzeug soll erreicht werden, daß der Span vom Werkstück während der Zerspanung abgelenkt wird.

Die DE 28 40 610 A1 beschreibt einen Schneideinsatz zur Verbesserung der Spanbrechung und Spanentfernung, auch bei sich stark ändernden Schnittbedingungen, der Eindrückungen entlang der Schneidkante oder entlang den Schneidkanten in einer fortlaufenden Folge besitzt, die so geformt sind, daß ihre Breite oder größte Ausdehnung parallel zur Schneidkante größer ist als der Abstand zwischen zwei benachbarten oder aufeinanderfolgenden Eindrückungen. Diese Eindrückungen durchbrechen die Schneidkante und sind zum rückwärtigen Ende mit einer im wesentlichen scharfen Kante zur Spanfläche hin ausgeführt. Die Spanfläche kann zusätzlich mit einer entlang der Schneidkante verlaufenden Fase versehen sein, deren Breite von der Schneidkantenecke in Richtung auf die Schneidkantenmitte abnimmt.

Der Schneideinsatz nach der EP 0 414 241 A2 besitzt Einkerbungen sowohl an der Freifläche als auch an der Spanfläche, die im Bereich der Schneidkante jeweils ineinander übergehen, wodurch die Schneidkante im Bereich der Einkerbungen gegenüber den übrigen Schneidkantenbereichen zurücktritt. Die jeweilige Trapezform ist scharfkantig ausgeführt, weshalb die Zielsetzung hoher Standzeiten nur bedingt erreicht werden kann. Darüber hinaus ist die beim Spanablauf auf der Spanfläche auftretende Reibung sehr hoch. Dieser Schneideinsatz kann auch nur für einen bestimmten Fertigungseinsatz verwendet werden.

In der WO 93/11898 wird ein Schneideinsatz für die Grobbearbeitung metallischer Werstücke bei hohen Vorschüben beschrieben, der zur Verbesserung des Spanablaufes beim Schneiden sich entlang der Schneidkante erstreckende Eindrückungen in einem parallel zur Schneidkante und senkrecht zur Spanfläche liegenden Querschnitt eine Trapezform bilden, deren Trapezflanken zur Spanfläche hin geöffnet sind, wobei der Spanflächengrund zur Schneidkante hin unter einem negativen oder einem Spanwinkel von 0° hin ausläuft und die Spanfläche im Bereich zwischen den Eindrückungen und der Schneidkante einen positiven Spanwinkel besitzt.

Es ist Aufgabe der vorliegenden Erfindung, einen Schneideinsatz zu schaffen, mit dem ein sehr weicher Schnitt reibungsarm möglich ist, die Schneidkante stabilisiert ist und mit dem hohe Vorschübe realisierbar sind.

Dieser Aufgabe wird durch den Schneideinsatz nach Anspruch 1 gelöst, der dadurch gekennzeichnet ist, daß mindestens eine zusätzliche bis zur Schneidkante reichende und diese durchberechende Einsenkung oder Aussparung zur weiteren Verjüngung der Fasenabschnitte vorgesehen ist. Es hat sich nämlich herausgestellt, daß die Spanbildung und der Spanablauf nur dann optimal und gezielt beeinflußt werden können, wenn der Span direkt an der Schneidkante oder in deren Nähe beeinflußt wird. Insbesondere in Verbindung mit hohen Vorschüben bietet sich die erfindungsgemäße Lösung an. Hierdurch ergeben sich Wirkungen, die größer sind als die Summe der Effekte, die sich bei jeweils einseitiger Verjüngung der Fase durch betreffende Eindrückungen oder Ausnehmungen ergeben, insbesondere unter Berücksichtigung des Schneidkantenschutzes. Wesentliches Merkmal ist demnach, daß sowohl von der Schneidkante her gesehen als auch im Abstand zur Schneidkante jeweils sich gegenüberliegende Eindrückungen oder Ausnehmungen vorgesehen sein müssen, die in den betreffenden Bereichen die Fase erheblich verjüngen.

Weiterbildungen der Erfindung sind in den Unteransprüchen beschrieben.

So kann die Fase unter positivem, negativem oder einem 0°-Fasenwinkel angeordnet werden.

Nach einer weiteren Ausgestaltung der Erfindung können die zusätzlichen Einsenkungen oder Aussparungen in vertikaler Richtung zur Schneidkante oder in Spanablaufrichtung im wesentlichen muldenförmig mit einer konkav gekrümmten Spanablauffläche oder mit einer linear ansteigenden Spanablauffläche ausgebildet sein. Vorzugsweise bei linear ansteigender Spanablauffläche in senkrechter Richtung zur Schneidkante sind die zusätzlichen Einsenkungen oder Aussparungen seitlich durch Anstiegsflanken begrenzt, die konkav oder ebenflächig sein können. Um einen starken Verschleiß in den Übergangsbereichen zur Fase zu vermeiden, sind die Kanten abgerundet. Entsprechendes gilt für die Ecken zwischen den Anstiegsflanken und dem Boden der Einsenkungen oder Aussparungen.

Nach einer weiteren Ausgestaltung der Erfindung erweitern sich die Einsenkungen oder Aussparungen zur Schneidkante bzw. zur Freifläche hin in ihrer Breite, was vorzugsweise konisch ausgeführt wird. Diese Ausgestaltung der Flanken bewirkt eine Krümmung des Spanes, verbunden mit einem reibungsärmeren Spanablauf entlang der Spanfläche.

Zur weiteren Schneidkantenstabilisierung kann neben oder zwischen den zusätzlichen Einsenkungen oder Aussparungen eine schmalere Fase mit kleinerem positiven oder 0°-Winkel oder einem absolut größeren negativen Winkel der sich in diesen Bereichen im Abstand von der Schneidkante anschließenden (breiteren) Fase liegt. Diese schmalere Fase kann auch leicht abgerundet ausgeführt sein.

Zur Reibungsminimierung des Spanes ist die sich an die Fase oder die breitere Fase in senkrechter Richtung zur Schneidkante hin anschließende Spanfläche mit einer abfallenden Flanke versehen, deren Grenzlinie zur Fase oder breiteren Fase derart verläuft, daß der Abstand der Grenzlinie zur Schneidkante in den Bereichen minimal ist, in denen die zusätzlichen Einsenkungen oder Aussparungen liegen, so daß die abfallende Flanke das Maß der Verjüngung mitbestimmt. Anders ausgedrückt, die abfallende Flanke reicht in den Bereichen der vorderen Einsenkungen oder Ausnehmungen näher zur Schneidkante hin als in den übrigen Bereichen. Die insoweit vorstehenden Bereiche der abfallenden Flanke stellen dann die (hinteren) Ausnehmungen dar. Alternativ hierzu kann die Verjüngung der Fasenabschnitte auch durch muldenförmige Einsenkungen und/oder Ausnehmungen in der Spanfläche erzielt werden, die den zusätzlichen Einsenkungen oder Ausnehmungen gegenüberliegen. Diese Einsenkungen oder Ausnehmungen können auch mit einer abfallenden Flanke oder einer im wesentlichen ebenen Spanablauffläche kombiniert werden.

Nach einer weiteren Ausgestaltung der Erfindung ist die Breite der verjüngten Fasenabschnitte über eine Strecke parallel zur Schneidkante konstant. Diese parallel zur Schneidkante gemessene Breite der verjüngten Fasenabschnitte soll vorzugsweise 1,5 bis 5mal größer sein als der Abstand zwischen zwei Verjüngungsbereichen der Fase.

Die parallel zur Schneidkante gemessene Gesamtbreite der verjüngten Fasenabschnitte oder der Strecken konstanter Verjüngung liegt zwischen 1/4 und 3/4 der gesamten Fasenbreite bzw. Schneidkantenlänge. Die senkrecht zur Schneidkante gemessene Breite der Fase oder der breiteren Fase liegt vorzugsweise im Bereich der Verjüngung zwischen 1/4 und 3/4 der nicht verjüngten Fasenbreite, die zwischen 0,3 und 2 mm beträgt.

Nach einer weiteren Ausgestaltung der Erfindung kann die Spanfläche, vorzugsweie auch die Fase mit Vertiefungen und/oder erhabenen Spanformelementen versehen sein und/oder in paralleler Richtung zur Schneidkante ungeradlinig, vorzugsweise konvex oder konkav gekrümmt oder wellenförmig verlaufen. Auch kann die Schneidkante geradlinig, wellenförmig, konkav oder konvex ausgestaltet sein. Die Tiefe der Ausnehmungen oder Eindrückungen sollte gegenüber den sie umgebenden Spanflächenbereichen im Regelfall unter 1,5 mm liegen.

Für die Ausgestaltung der Schneidkantenformen, muldenförmigen oder erhabenen Spanformelemente kann auf die nach dem Stand der Technik bekannten Ausführungsformen zurückgegriffen werden, insbesondere auch auf die in der DE 41 18 065 A1, Spalten 1 und 2, angesprochenen Spanformelemente sowie der rippenförmigen Spanformelemente, mit oder ohne Einkerbungen.

Ausführungsbeispiele der Erfindung sind in den Zeichnungen dargestellt. Es zeigen
- Fig. 1 und 2: jeweils Draufsichten auf verschiedene Ausführungsformen von Schneideinsätzen,
- Fig. 3: eine perspektivische Teilansicht eines Stecheinsatzes,
- Fig. 4: einen Schnitt entlang der Linie B - B nach Fig. 3,
- Fig. 5: einen Schnitt entlang der Linie C - C nach Fig. 3 und
- Fig. 6: einen Schnitt entlang der Linie A - A mit drei verschiedenen möglichen Ausführungsformen.
- Fig. 7: eine perspektivische Teilansicht eines weiteren Stecheinsatzes,
- Fig. 8: einen Schnitt entlang der Linie D - D und
- Fig. 9: einen Schnitt entlang der Linie E - E.

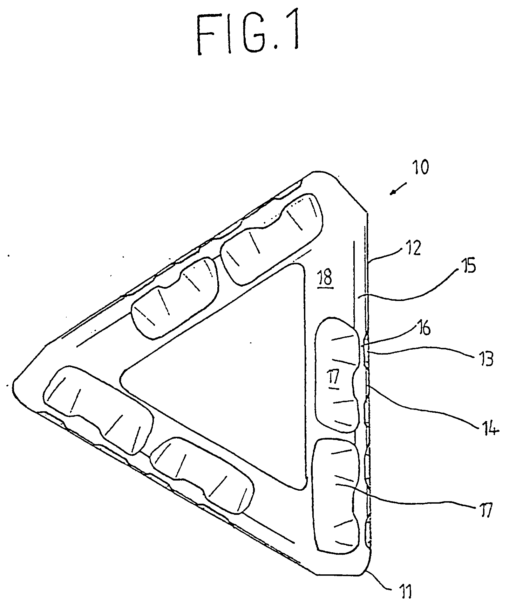

Der in Fig. 1 dargestellte im wesentlichen dreieckige Schneideinsatz 10 besitzt drei Schneidecken 11 mit jeweils einer hieran sich anschließenden (wirksamen) Schneidkante 12 als Grenzlinie zwischen der Spanfläche und der Freifläche. Auf der Spanfläche und die Schneidkante 12 abschnittsweise durchbrechend sind Ausnehmungen 13 vorgesehen, die sich zu ihrem vorderen Ende hin verbreitern. Diese Ausnehmungen 13 durchbrechen eine schmalere vordere erste Fase 14 und sind in Richtung senkrecht zur Schneidkante 12 tiefer als die betreffende Breite der Fase 14 ausgeführt. Hieran schließt sich eine Fase 15 an, die abschnittsweise zu schmalen Bereichen 16 verjüngt wird, da in diesen Bereichen sich die Ausnehmungen 13 sowie weitere Ausnehmungen 17 gegenüberliegen, wobei die betreffenden Ausnehmungen 17 im vorliegenden Fall in einer abfallenden Flanke 18 angeordnet sind. Die Ausnehmungen 17 sind muldenförmig und können beliebige Gestaltungen, wie Kreise, ovale, rechteckige oder auch trapezförmige Gestalt, mit oder ohne vorstehende Ausnehmungen besitzen, wie dies nach der Ausführungsform in Fig. 1 der Fall ist. Wesentlich ist, daß diese Ausnehmung 17 in den Bereich der Fase 15 hineinreichen und zusammen mit den vorderen Ausnehmungen 13 eine Verjüngung 16 der Fase 15 bilden. Die Ausnehmungen können jeweils äquidistant zueinander oder auch nur zur einen Schneidecke 11 hin etwa bis zur Schneidkantenmitte oder einer 2/3-Länge der Schneidkante ausgeführt sein.

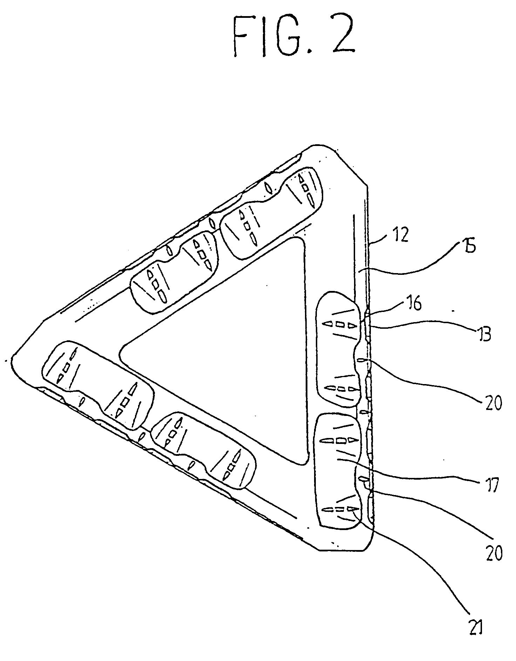

Die Ausführungsform nach Fig. 2 unterscheidet sich von der vorbeschriebenen Ausführungsform allein dadurch, daß zusätzlich Spanformelemente 20 und 21 vorgesehen sind, die als erhabene Spanformelemente 20 in der Fase 15 angeordnet sind, vorzugsweise in den Bereichen, in denen die Fase 15 nicht verjüngt ist, d.h. außerhalb der Bereiche 16. Ferner können Spanformelemente 21 auch in den Mulden 17 vorgesehen sein, etwa dergestalt und in einer Anordnung, wie sie beispielsweise in der DE 41 18 065 A1 beschrieben wird. Auch hier werden die keilförmigen Spanformelemente vertikal zur Schneidkante 12 ausgerichtet, insbesondere in Richtung auf die Verjüngungsbereiche 16 weisend.

Anstelle der dargestellten dreieckigen Schneideinsatzform können auch andere Geometrien verwendet werden, wie viereckige, insbesondere quadratische, rautenförmige, neuneckige oder auch runde Schneideinsätze bzw. Schneideinsätze mit in Draufsicht zumindest teilweise abgerundeter Schneidkante, die auch in einer Draufsicht auf die Freifläche gesehen gerade, konvex oder konkav gewölbt oder wellenförmig ausgebildet sein kann.

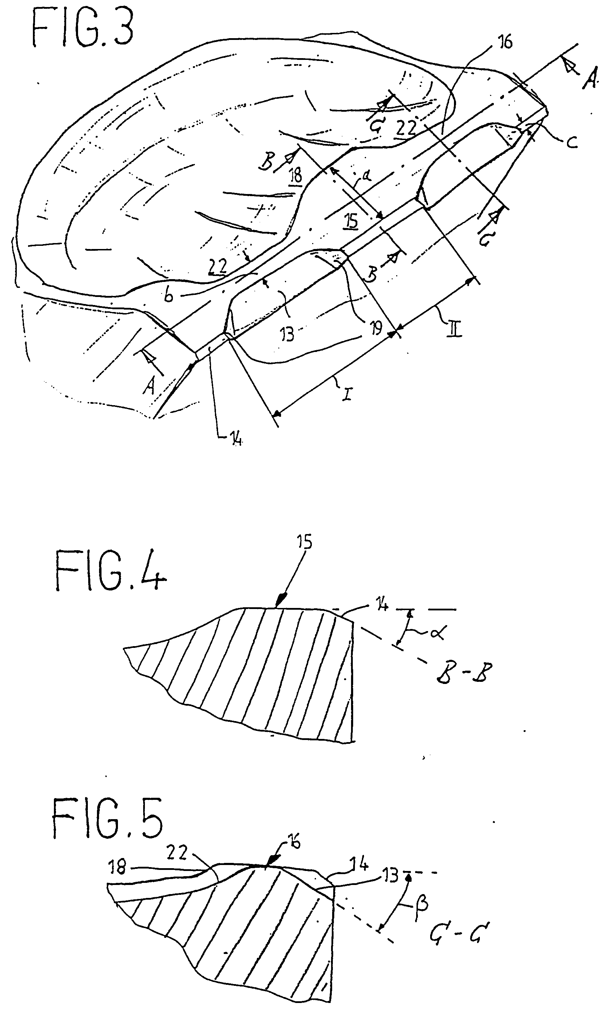

Fig. 3 bis 6 zeigt die Realisierung der vorliegenden Erfindung an einem Abstechschneideinsatz mit einer Schneidkante 12, einer schmalen Fase 14 sowie zwei Ausnehmungen 13, die sich nach vorne hin verbreitern und seitliche Anstiegsflanken 19 aufweisen. Die Fase 15 besitzt in entsprechender Weise, wie zu Fig. 1 und 2 beschrieben, Verjüngungsbereiche 16, die gebildet werden aus den Zwischenräumen zwischen den Ausnehmungen 13 und Ausnehmungen 22, die als Verlängerung eines abfallenden Wandbereiches 18 zur Schneidkante hin ausgebildet sind.

Vorzugsweise wird die senkrecht zur Schneidkante gemessene Breite der (nicht verjüngten) Fase 15 mit a = 0,3 bis 2 mm gewählt, wogegen die Breite b des verjüngten Fasenabschnittes 16 zwischen 1/4 bis 3/4 der Breite a liegt. Die Länge I der Ausnehmung 13, die der Strecke des Verjüngungsabschnittes konstanter Breite zuzüglich der beiden Erweiterungsbereiche der Fase entspricht, ist 1,5 bis 5mal größer als der zwischen zwei Einsenkungen liegende Bereich, das ist der Bereich der maximalen Fasenbreite. Insgesamt soll die Gesamtbreite aller Fasenverjüngungen relativ zur Gesamtbreite der Fase bzw. Schneidkantenlänge etwa 1/4 bis 3/4 eben dieser Länge ausmachen. Die Breite c der schmalen Fase beträgt 1/3 bis 1/2 des Maßes der Gesamtfasenbreite a + c.

Wie Fig. 4 zu entnehmen ist, ist im vorliegenden Fall die Fase 15 unter einem Fasenwinkel von 0° angeordnet, wobei dieser Fasenwinkel vorzugsweise zwischen -10° und +10° liegen soll, während die schmalere Fase 14 einen negativen Fasenwinkel α von -20° bis -5° besitzt. Die Fase 15 kann jedoch auch unter einem positiven oder einem negativen Winkel ausgeführt werden, wobei die Fase 15 auch ohne die Fase 14 vorgesehen sein kann. Die schmalere Fase 14 bildet mit der Fase 15 stets einen stumpfen Winkel unterhalb von 180°. Aus dem Schnitt C - C nach Fig. 5 ist zu erkennen, wie durch Ausnehmung 22 bzw. 13 die Verjüngung 15 gebildet wird. Die Ausnehmung 13 liegt unter einem Winkel β zwischen -15° und +3°.

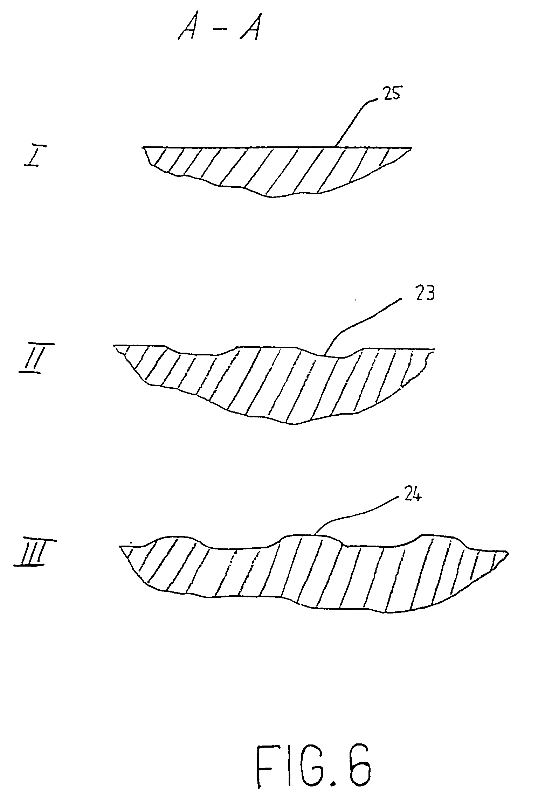

Fig. 6 demonstriert, daß auch auf der Fase 15 oder im Verjüngungsbereich 16 Vertiefungen 23 oder Erhebungen 24 ebenso vorgesehen sein können wie die Fase 15 ebenflächig, d.h. geradlinig (vgl. Bezugszeichen 25) ausgestaltet werden kann.

Die vorliegende Erfindung ist jedoch keineswegs auf die dargestellten Ausführungsformen begrenzt, ebensogut sind Ausführungsformen möglich, bei denen Teilelemente der Fig. 1 und 2 beim Abstechwerkzeug nach Fig. 3 und umgekehrt verwendet werden.

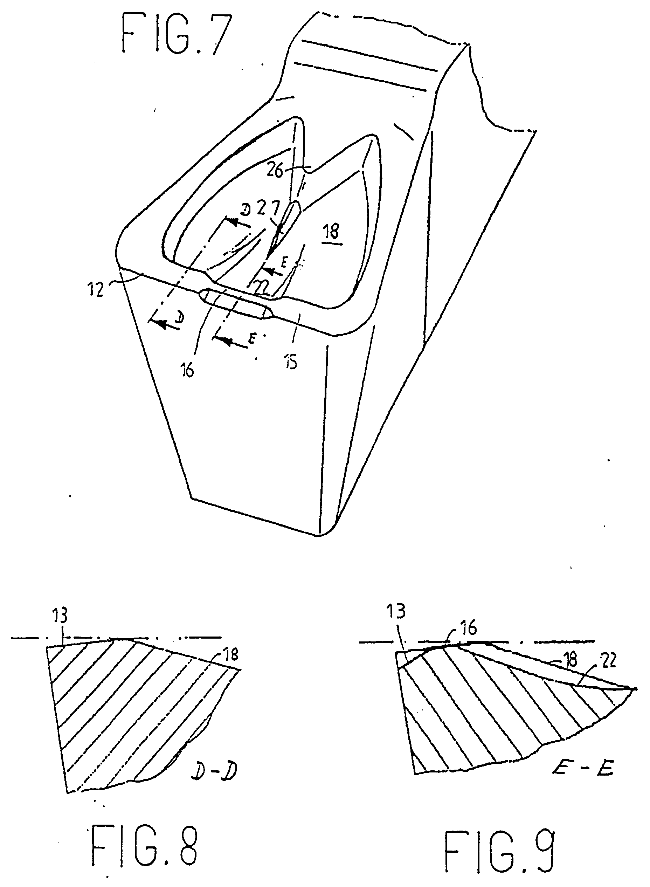

Der Stecheinsatz nach Fig. 7 bis 9 besitzt über seiner gesamten Schneidkante 12 nur eine einzige Ausnehmung 13, die mittig in der Schneidkante angeordnet ist. Im übrigen gilt Entsprechendes wie zu Fig. 3 beschrieben, mit Ausnahme der Tatsache, daß keine Fase 14, sondern nur eine Fase 15 vorgesehen ist. Die Spanfläche ist muldenförmig ausgebildet und besitzt einen Spanformer 26, der zur Schneidkante 12 in einen senkrecht ausgerichteten Keil 27 in Längsrippenform besitzt. Die Ausbildung dieser Keile bzw. Längsrippen ist Gegenstand der DE 41 36 417.1 A1, auf deren Offenbarung verwiesen wird.

## Patentansprüche

1. Schneideinsatz für die spanende Bearbeitung, insbesondere zum Fräsen, Drehen oder Stechen, mit mindestens einer Schneidkante (12) und einer sich hieran anschließenden Fase (15), in die im Abstand von der Schneidkante (12) mindestens eine Einsenkung (17, 22) oder Aussparung hineinragt und diese abschnittsweise verjüngt,
**dadurch gekennzeichnet**,
daß mindestens eine zusätzliche parallel zur Einsenkung (17, 22) liegende bis zur Schneidkante (12) reichende und diese durchbrechende Einsenkung (13) oder Aussparung zur weiteren Verjüngung (16) der Fasenabschnitte (15) vorgesehen ist.

2. Schneideinsatz nach Anspruch 1, dadurch gekennzeichnet, daß die zusätzlichen Einsenkungen oder Aussparungen (13) in vertikaler Richtung zur Schneidkante (12) oder in Spanablaufrichtung im wesentlichen muldenförmig mit einer konkav gekrümmten Spanablauffläche oder mit einer linear ansteigenden Spanablauffläche ausgebildet sind, wobei die zusätzlichen Einsenkungen oder Aussparungen (13) vorzugsweise eine ebene Spanablauffläche aufweisen, die seitlich durch Anstiegsflanken (19) begrenzt wird.

3. Schneideinsatz nach Anspruch 1 oder 2, dadurch gekennzeichnet, daß seitliche Anstiegsflanken (19) konkav oder ebenflächig, vorzugsweise mit abgerundeten Kanten und/oder Ecken zur Fase (15) bzw. dem Boden der Spanablauffläche ausgebildet sind und/oder daß die Einsenkungen oder Aussparungen (13) sich zur Schneidkante (12) bzw. zur Freifläche hin in ihrer Breite erweitern, vorzugsweise konisch.

4. Schneideinsatz nach einem der Ansprüche 1 bis 3, dadurch gekennzeichnet, daß neben oder zwischen den zusätzlichen Einsenkungen oder Aussparungen (13) eine schmalere Fase (14) mit kleinerem positiven oder 0°-Winkel oder einem absolut größerem negartiven Winkel gegenüber der sich in diesen Bereichen im Abstand von der Schneidkante anschließenden Fase (15) liegt, wobei daß die sich an die Fase (15) oder die breitere Fase (15) in vertikaler Richtung zur Schneidkante (12) hin anschließende Spanfläche eine abfallende Flanke (18) aufweist, deren Grenzlinie zur Fase (15) oder breiteren Fase (15) derart verläuft, daß der Abstand der Grenzlinie zur Schneidkante (12) in den Bereichen (16) minimal ist, in denen die zusätzlichen Einsenkungen oder Aussparungen (22) liegen, so daß die abfallende Flanke (18 bzw. 22) das Maß der Verjüngung (16) mitbestimmt.

5. Schneideinsatz nach einem der Ansprüche 1 bis 4, dadurch gekennzeichnet, daß die Verjüngung (16) der Fasenabschnitte durch muldenförmige Einsenkungen (17) und/oder Ausnehmungen in der Spanfläche, die den zusätzlichen Einsenkungen oder Ausnehmungen (13) gegenüberliegen, bestimmt wird und/oder daß die Breite der verjüngten Fasenabschnitte (16) über eine Strecke (s) parallel zur Schneidkante (12) konstant ist.

6. Schneideinsatz nach einem der Ansprüche 1 bis 5, dadurch gekennzeichnet, daß die parallel zur Schneidkante (12) gemessene Breite der verjüngten Fasenabschnitte (16) größer ist als der Abstand zwischen zwei Verjüngungsbereichen (16), vorzugsweise um einen Faktor 1,5 bis 5 und/oder daß die parallel zur Schneidkante gemessene Gesamtbreite der verjüngten Fasenabschnitte (16) zwischen 1/4 und 3/4 der Gesamtbreite der Fase (Schneidkantenlänge) liegt.

7. Schneideinsatz nach einem der Ansprüche 1 bis 6, dadurch gekennzeichnet, daß die senkrecht zur Schneidkante (12) gemessene Breite der Fase (15) im Bereich der Verjüngung (16) zwischen 1/4 und 3/4 der unverjüngten Fase (15) und/oder außerhalb des Verjüngungsbereiches (16) zwischen 0,3 und 2 mm liegt.

8. Schneideinsatz nach einem der Ansprüche 1 bis 7, dadurch gekennzeichnet, daß die Spanfläche, vorzugsweise auch die Fase (15) mit Vertiefungen und/oder erhabenen Spanformelementen (20, 21) versehen ist und/oder in paralleler Richtung zur Schneidkante (12) ungeradlinig, vorzugsweise konvex oder konkav oder wellenförmig verläuft.

9. Schneideinsatz nach einem der Ansprüche 1 bis 8, dadurch gekennzeichnet, daß der Schneideinsatz eine geradlinige, wellenförmige, konkav oder konvex verlaufende Schneidkante (12) besitzt und/oder daß die Tiefe der Ausnehmungen (13) oder Eindrückungen gegenüber den sie umgebenden Spanflächenbereichen unter 1,5 mm liegt.

10. Schneideinsatz nach einem der Ansprüche 1 bis 9, dadurch gekennzeichnet, daß die Fasenwinkel für Fase (15) zwischen -10° und +10°, für den Fasenwinkel (α) einer vorderen Fase (14) zwischen -20° bis -5° und/oder der Winkel der Ausnehmungen (13) zwischen -15° und +5° liegen.

## Claims

1. Cutting insert for chip-removal machining, particularly for milling, turning or punching, with at least one cutting edge (12) and at least one adjacent chamfer(15) into which projects at least one adjacent depression (17, 22) or recess at a distance from the cutting edge (12), and narrow them in sections characterised in that at least one additional depression (13) or recess is provided parallel to the depression (17, 22) extending up to the cutting edge (12) and interrupting it for a further narrowing (16) of the chamfer sections (15).

2. Cutting insert according to claim 1, characterised in that the additional depressions or recesses (13) are arranged in perpendicular direction with respect to the cutting edge (12) or in the direction of the chip removal flow and are substantially trough-shaped with a concavely curved chip flow surface or with a linearly ascending chip flow surface, whereby the additional depressions or recesses (13) have preferably a flat chip flow surface, which is laterally bordered by upwards sloping flanks (19).

3. Cutting insert according to claim 1 or 2, characterised in that the lateral upwards sloping flanks (19) have a concave or flat shape, preferably with rounded edges and/or corners to the chamfer (15), respectively the bottom of the chip flow surface, and/or that the depressions or recesses (13) increase their width, preferably conically, towards the cutting edge (12), respectively the relief flank.

4. Cutting insert according to one of claim 1 to 3, characterised in that next to or between the additional depressions or recesses (13) lies a narrower chamfer (14) with a smaller positive angle or an angle of 0° or an absolute bigger negative angle in relation to the chamfer (15) situated in these areas at a distance from the cutting edge, whereby the face adjacent to the chamfer (15) or the wider chamfer (15) in perpendicular direction with respect to the cutting edge (12) has a downwards sloping flank (18) whose borderline to the chamfer (15) or the wider chamfer (15) runs so that the distance from the borderline to the cutting edge (12) is minimal in the areas (16), where the additional depressions or recesses (22) are located, so that the downwards sloping flank (18, resp. 22) plays a part in determining the size of the narrowing (16).

5. Cutting insert according to one of claims 1 to 4, characterised in that the narrowing (16) of the chamfer segments is determined by trough-shaped depressions (17) and/or recesses in the face, which are opposite to the additional depressions or recesses (13) and/or that the width of the narrowed chamfer segments (16) is constant over a span (s) parallel to the cutting edge (12).

6. Cutting insert according to one of claims 1 to 5, characterised in that the width of the narrowed chamfer segments (16) measured parallelly to the cutting edge (12) is bigger than the distance between two narrowed segments (16), preferably by a factor of 1.5 to 5 and/or that the total width of the narrowed chamfer segments (16) measured parallelly to the cutting edge ranges between 1/4 and 3/4 of the chamfer width (cutting edge length).

7. Cutting insert according to one of claims 1 to 6, characterised in that the width of the chamfer (15) in the area of the narrowing (16), measured perpendicularly with respect to the cutting edge (12) ranges between 1/4 and 3/4 of the chamfer (15) where it is not narrowed and/or outside the narrowed areas (16) between 0.3 and 2 mm.

8. Cutting insert according to one of claims 1 to 7, characterised in that the face, preferably also the chamfer (15) are provided with depressions and/or raised chip forming elements (20, 21) and/or run nonlinearly, preferably convexly or concavely, or wave-like, in parallel direction to the cutting edge (12).

9. Cutting insert according to one of claims 1 to 8, characterised in that the cutting insert has a rectilinear, wave-shaped, concave or convex cutting edge (12) and/or that in relation to the surrounding face areas the depth of the recesses (13) or the indentation lies below 1.5 mm.

10. Cutting insert according to one of claims 1 to 9, characterised in that the chamfer angles for chamfer (15) range between -10° and +10°, for the chamfer angle (α) of a frontal chamfer (14) they range between -20° to -5° and/or that the angle of the recesses (13) ranges between -15° and +5°.

## Revendications

1. Insert de coupe pour l'usinage par enlèvement de copeaux, en particulier pour le fraisage, le tournage ou à saigner, comprenant un tranchant (12) du moins et un chanfrein (15) contigu à celui-ci, dans lequel, à une certaine distance par rapport au tranchant (12), du moins un enfoncement (17, 22) ou évidement s'étend quelque peu et rétrécit celui-ci par sections,
**caractérisé par le fait**
que l'on prévoit du moins un enfoncement (13) ou évidement supplémentaire pour un autre rétrécissement (16) des sections du chanfrein (15), ledit enfoncement (13) ou évidement étant situé parallèlement à l'enfoncement (17, 22), s'étendant jusqu'au tranchant (12) et interrompant ce dernier.

2. Insert de coupe selon la revendication 1, caractérisé par le fait que les enfoncements ou évidements (13) supplémentaires sont réalisés - dans la direction verticale au tranchant (12) ou dans la direction d'écoulement des copeaux - de manière à présenter pour l'essentiel la forme d'un creux avec une face d'écoulement des copeaux courbée de façon concave ou avec une face d'écoulement des copeaux, qui monte linéairement, les enfoncements ou évidements (13) supplémentaires présentant de préférence une face plane d'écoulement des copeaux, qui est limitée latéralement par des flancs montants (19).

3. Insert de coupe selon la revendication 1 ou 2, caractérisé par le fait que les flancs montants (19) latéraux sont formés de manière concave ou à surface plane, de préférence avec des arêtes et/ou coins arrondis vers le chanfrein (15) ou bien vers le fond de la face d'écoulement des copeaux, et/ou que les enfoncements ou évidements (13) s'agrandissent en large, de préférence de manière conique, vers le tranchant (12) ou bien vers la face de dépouille.

4. Insert de coupe selon l'une des revendications 1 à 3, caractérisé par le fait que près des ou entre les enfoncements ou évidements (13) supplémentaires est situé un chanfrein (14) plus étroit avec un angle positif plus petit ou un angle de 0° ou un angle négatif absolument plus grand par rapport au chanfrein (15) se trouvant dans cette zone à une distance du tranchant, la face de coupe adjacente au chanfrein (15) ou au chanfrein plus large (15) dans la direction verticale par rapport au tranchant (12) présente un flanc descendant (18) dont la ligne limite s'étend vers le chanfrein (15) ou vers le chanfrein (15) plus large de telle manière que la distance de la ligne limite au tranchant (12) est minimale dans les zones (16) dans lesquelles sont situés les enfoncements ou évidements (13) supplémentaires, de sorte que le flanc descendant (18 ou bien 22) participe à la détermination de la mesure du rétrécissement (16).

5. Insert de coupe selon l'une des revendications 1 à 4, caractérisé par le fait que le rétrécissement (16) des sections du chanfrein est déterminé par des enfoncements (17) et/ou évidements en forme de creux dans la face de coupe, qui sont situés en face des enfoncements ou évidements (13) supplémentaires, et/ou que la largeur des sections rétrécies (16) du chanfrein est constante sur une distance (s) parallèle au tranchant (12).

6. Insert de coupe selon l'une des revendications 1 à 5, caractérisé par le fait que la largeur des sections rétrécies (16) du chanfrein, mesurée parallèlement au tranchant (12), est plus grande que la distance entre deux zones rétrécies (16), de préférence d'un facteur de 1,5 à 5, et/ou que la largeur totale des sections rétrécies (16) du chanfrein, mesurée parallélement au tranchant, est comprise entre 1/4 et 3/4 de l'ensemble de la largeur du chanfrein (longueur du tranchant).

7. Insert de coupe selon l'une des revendications 1 à 6, caractérisé par le fait que la largeur du chanfrein (15), mesurée verticalement au tranchant (12) est comprise entre 1/4 et 3/4 du chanfrein (15) non rétréci dans la zone du rétrécissement (16) et/ou entre 0,3 et 2 mm à l'extérieur de la zone rétrécie (16).

8. Insert de coupe selon l'une des revendications 1 à 7, caractérisé par le fait que la face de coupe, de préférence également le chanfrein (15) est pourvu de creux et/ou d'éléments convexes à former le copeau (20, 21), et/ou s'étend, dans la direction parallèle au tranchant (12), d'une façon non rectiligne, de préférence d'une manière convexe ou concave ou ondulée.

9. Insert de coupe selon l'une des revendications 1 à 8, caractérisé par le fait que l'insert de coupe possède un tranchant (12) s'étendant de façon rectiligne, ondulée, concave ou convexe et/ou que la profondeur des évidements (13) ou des enfoncements, par rapport aux zones de la face de coupe qui les entourent, est inférieure à 1,5 mm.

10. Insert de coupe selon l'une des revendications 1 à 9, caractérisé par le fait que les angles du chanfrein pour le chanfrein (15) sont compris entre -10° et +10°, pour l'angle de chanfrein (α) d'un chanfrein avant (14) entre -20° et -5° et/ou que l'angle de l'évidement (13) est compris entre -15° et +5°.
